Europäisches Patentamt

European Patent Office

Office européen des brevets

(11) Publication number: **0 168 576**
A1

# (12) EUROPEAN PATENT APPLICATION

(21) Application number: **85105751.3**

(22) Date of filing: **10.05.85**

(51) Int. Cl.⁴: **B 60 T 13/14**

(30) Priority: **02.07.84 US 627176**

(43) Date of publication of application: **22.01.86**
**Bulletin 86/4**

(84) Designated Contracting States: **DE FR GB IT**

(71) Applicant: **ALLIED CORPORATION, Columbia Road and Park Avenue P.O. Box 2245R (Law Dept.), Morristown New Jersey 07960 (US)**

(72) Inventor: **Messersmith, William K., 1702 Belmont Avenue, South Bend Indiana 46615 (US)**

(74) Representative: **Brullé, Jean et al, Service Brevets Bendix 44, rue François 1er, F-75008 Paris (FR)**

(54) **A brake booster.**

(57) A brake booster comprises a housing with a bore receiving three pistons. A valve assembly is carried in one of the pistons for movement therewith during braking and a projection extends from the one piston through another piston to oppose the last mentioned piston.

## A BRAKE BOOSTER

The present invention relates to a brake booster wherein fluid pressure is communicated to a housing to provide a power assist during braking. The brake booster comprises a closed center system with fluid pressure stored in an accumulator for selective utilization during braking.

In United States Patent 4,441,319 a brake booster utilizes fluid pressure to generate a power assist during braking. The brake booster includes a housing with a bore to receive a primary piston and a secondary piston so that a primary pressure chamber communicates with one brake circuit while a secondary pressure chamber communicates with another brake circuit. The primary piston carries a valve assembly which is operable to control communication of fluid pressure to a work chamber. Where a brake pedal is actuated during braking, the primary piston is movable in response to fluid pressure communicated to the work chamber to generate fluid pressure in the primary pressure chamber, which, in turn biases the secondary piston to move and generate fluid pressure in the secondary pressure chamber. Until sufficient fluid pressure is generated in the primary pressure chamber to overcome a return spring engaging the secondary piston, the secondary piston remains substantially stationary in the housing so that less fluid pressure is generated in the secondary pressure chamber during initial braking. The travel of the brake pedal is equal to the sum of the travel for the primary piston plus the travel for the secondary piston.

The present invention comprises a brake booster with a housing having a bore there, at least three pistons movably disposed within the housing bore, the first piston carrying a valve assembly, the second piston cooperating with the housing and the third piston to substantially define a primary pressure chamber communicating with one brake circuit, the third piston cooperating with the housing to substantially define a secondary pressure chamber communicating with another brake circuit, the valve assembly being operable during braking to control communication of fluid pressure to the housing bore to provide a power assist during braking characterized in that said first piston includes a projection extending from said first piston to said third piston to impart movement to said third piston in response to movement of said first piston and said projection extends through said second piston and into said primary pressure chamber to oppose said third piston.

It is an advantage of the present invention that the projection enables the third piston to move in response to movement of the first piston rather than solely in response to movement of the second piston. As a result the first piston is coupled to said third piston such that the travel of a brake pedal is substantially equal to the travel of the third piston to reduce pedal travel. With the secondary pressure chamber communicating with the brake circuit having the lowest ratio of per cent fluid displacement to per cent braking, the pedal travel will be reduced.

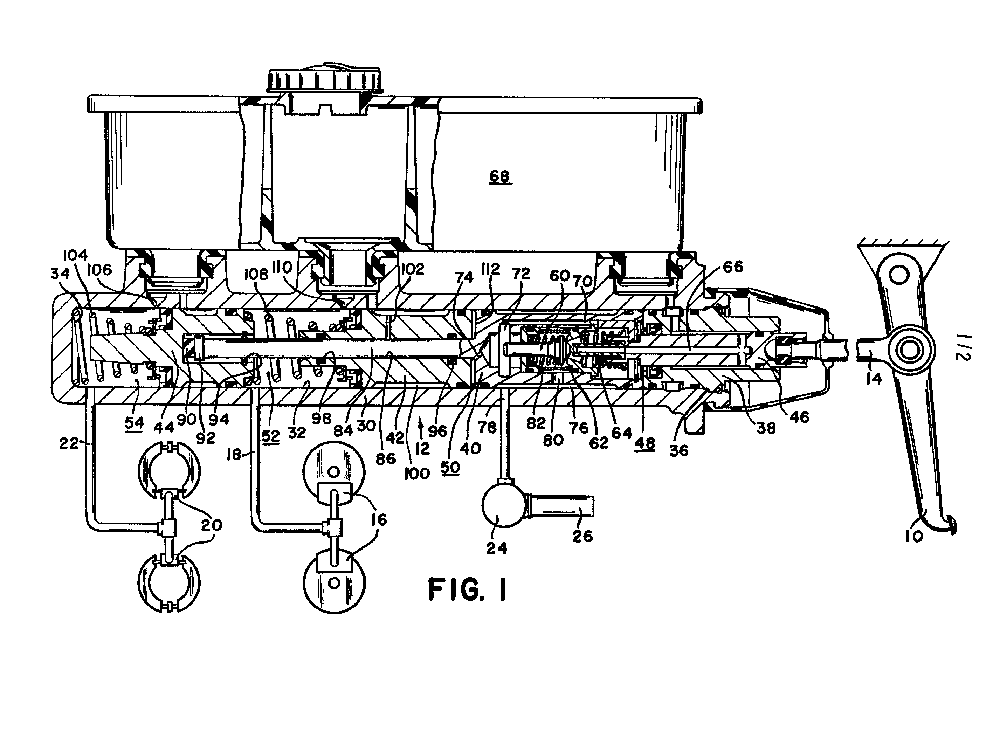

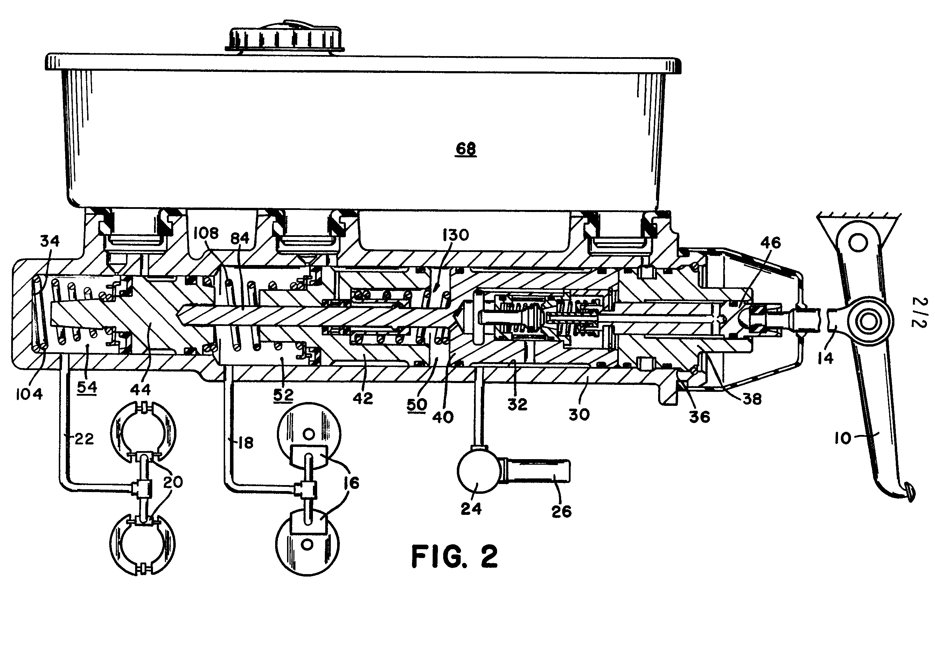

In the drawings Figure 1 shows a braking system with the brake booster of the present invention illustrated in cross section. Figure 2 shows an alternative design for the brake booster.

A brake system includes a brake pedal 10 connected to a brake booster 12 via link 14 and the brake booster 12 communicates with a first pair of brakes 16 via conduit 18 and a second pair of brakes 20 via conduit 22. An accumulator 24 fluidly communicates with the brake booster 12 and a pump 26 is operable to maintain a predetermined fluid pressure level in the accumulator.

The brake booster 12 includes a housing 30 with a uniform diameter bore 32 extending from an end wall 34 to an open end 36. A plug 38 is disposed in the bore 32 at the open end 36. A first piston 40 is disposed in the bore 32 adjacent the plug 38 in a rest position. A second piston 42 is disposed in the bore 32 at an intermediate location while a third piston 44 is disposed in the bore 32 near the end wall 34. The first piston 40 cooperates with the end plug 38 and a plunger 46 to define a first work chamber 48 while a second work chamber 50 is defined between the first piston 40 and the second piston 42. A primary pressure chamber 52 is defined in the bore 32 between the second and third pistons and a secondary pressure chamber 54 is defined between the end wall 34 and the third piston 44. The primary pressure chamber 52 communicates with the conduit 18 and the secondary pressure chamber 54 communicates with the conduit 22.

The first piston 40 forms a recess 56 receiving a valve assembly 58. The valve assembly comprises a valve member 60 engaging a seat 62 with a valve stem 64 opposing the valve member 60. The valve stem 64 and plunger 46 form a passage 66 normally communicating the first and second work chambers with the reservoir 68. An opening 70 on the first piston 40 extends from one side of valve member 60 to the other side at pocket 72. A passage 74 communicates pocket 72 with the second work chamber 50. The first piston 40 defines a clearance 76 with the wall of bore 32 and an inlet 78 communicates the accumulator 24 with the clearance 76. A radial port 80 on the first piston communicates fluid pressure in the clearance 76 to a cavity 82. The valve member 60 extends through the cavity 82 to engage the seat 62 and normally isolate fluid pressure in the cavity from the work chambers.

The first piston 40 includes a projection 84 extending through the first work chamber and also through an opening 86 in the second piston 42 to oppose the third piston 44. The third piston 44 forms a cavity 88 receiving the projection 84 and a resilient disc 90 is carried between the third piston 44 and the end 92 of projection 84. The end 92 of projection 84 is enlarged to cooperate with a snap ring 94 carried by the third piston so that upon removal of the projection 84 from the bore 32 the third piston will also be removed as the enlarged end forms an interference with the snap ring 94 to define a latch.  In order to isolate the first work chamber 50 from the primary pressure chamber 52 via opening 86, a pair of sealing rings 96 and 98 are carried by the second piston for sealing and sliding engagement with the projection 84 at the ends of the opening 86. The second piston 42 forms a clearance 100 with the wall of bore 32 and a port 102 communicates fluid from reservoir 68 to the opening 86 between the sealing rings 96 and 98.  A port 103 leads to the clearance 100 so that the projection is exposed to reservoir pressure between the sealing rings 96 and 98.

A return spring 104 biases the third piston 44 to its rest position so that a port 106 communicates the reservoir 68 with the secondary pressure chamber in the rest position.  A return spring 108 extends between the third piston 44 and the second piston 42 to bias the latter to its rest position so that a port 110 communicates the reservoir 68 with the primary pressure chamber 52 in the rest position.  The second piston 42 engages a shoulder 112 on the first piston 40 in the rest position.

When the brake pedal 10 is pivoted to a brake applied position the plunger 46 is moved to the left to engage valve stem 64 with valve member 60 so that passage 66 is closed.  Further movement in the plunger 46 separates the valve member 60 from the seat 62 to communicate fluid pressure from the accumulator 24 to work chamber 48 via port 78, clearance 76, passage 80, cavity 82 and through the opening in seat 62.  In addition, fluid pressure is communicated to passage 70 and pocket 72 to communicate fluid pressure to work chamber 50 via passage 74.  The fluid pressure in work chamber 48 acts across the diameter of bore 32 to generate a first force biasing the first piston to move to the left.  The first force is opposed by a second force generated in work chamber 50 biasing the first piston to move to the right. However, the second force is less than the first force as the projection 84 limits the area of the first piston exposed to the fluid pressure in the work chamber 50. Therefore, the first piston 40 moves to the left during braking. At the same time fluid pressure in the work chamber 50 acts against the second piston 42 to bias the latter to also move to the left. The movement of the first piston causes the projection 84 to also move and impart movement to the third piston 44. In addition, movement of the second piston 42 generates fluid pressure in the primary pressure chamber biasing the third piston to the left while the spring 108 is contracted to generate a further force biasing the third piston to the left. With ports 106 and 110 closed to the pressure chambers and the volume of the pressure chambers contracted, fluid pressure is generated therein for communication to the respective brake assemblies via conduits 22 and 18. Upon termination of braking, the brake pedal 10 is returned to its rest position so that a spring 114 biases the plunger to the right and a spring 116 biases the valve member to reengage the seat 62. The accumulator 24 and cavity 82 are closed from the work chambers and the passage 66 is opened to the work chambers to vent fluid pressure therein to the reservoir. With fluid pressure in the work chambers reduced, the return springs 104 and 108 bias the third piston, the second piston and the first piston to return to their rest positions.

In the alternative embodiment of Figure 2 wherein similar parts have the same reference numerals as Figure 1, the bore 32 is stepped and the projection 84 is secured to the third piston 44. The second piston is spaced from the first piston in the rest position by a top hat assembly 130 so that the first piston and projection are free to move in the brake applied direction even if the second piston fails to move during braking.

C L A I M S

1. A brake booster comprising a housing (30) with a bore (32) therein, at least three pistons (40, 42, 44) movably disposed within the housing bore (32), the first piston (40) carrying a valve assembly (58), the second piston (42) cooperating with the housing and the third piston to substantially define a primary pressure chamber (52) communicating with one brake circuit (18), the third piston (44) cooperating with the housing to substantially define a secondary pressure chamber (54) communicating with another brake circuit (22), the valve assembly (58) being operable during braking to control communication of fluid pressure to the housing bore (32) to provide a power assist during braking characterized in that said first piston (40) includes a projection (84) extending from said first piston (40) to said third piston (44) to impart movement to said third piston (44) in response to movement of said first piston (40) and said projection (84) extends through said second piston (42) and into said primary pressure chamber (52) oppose said third piston.

2. The brake booster of claim 1 in which said third piston (44) defines a cavity (88) facing said primary pressure chamber (52) and said projection (84) extends into said cavity (88).

3. The brake booster of claim 2 in which a rubber disc (90) is disposed within said cavity (88) between said third piston (44) and said projection (84).

4. The brake booster of claim 1 in which said first piston (40) cooperates with said second piston (42) to define a first work chamber (50) receiving fluid pressure during operation of the valve assembly (58) and said first piston (40) cooperates with an end plug (38) to define a second work chamber (48) also receiving fluid pressure during operation of the valve assembly (58).

5. The brake booster of claim 4 in which said second work chamber (48) develops a larger force biasing said first piston (40) in the direction of said second piston (42) than the force developed by said first work chamber (50) biasing said first piston (40) toward said end plug (38).

6. The brake booster of claim 1 in which said projection (84) is secured to said third piston (44).

7. The brake booster of claim 1 in which said projection (84) cooperates with said third piston (44) to define a latch (92,94) so that removal of said projection (84) said housing bore (32) also removes said third piston (44).

8. The brake booster of claim 1 in which said second piston (42) carries a pair of seals (96, 98) engaging said projection (84) to isolate a substantial portion of said projection (84) within said second piston (42) from the fluid pressure developed in the housing bore (32).

9. The brake booster of claim 8 in which said second piston (42) defines a clearance (100) with the housing isolated from the fluid pressure communicated to the housing bore (32) and said second piston (42) defines a passage (102) exposing the substantial portion of said projection (84) to the clearance (100).

10. The brake booster of claim 1 in which said first piston (40) defines a recess (72) receiving said valve assembly (58) said recess having an open end facing away from said second piston (42) and said first piston (40) defines a passage (74) adjacent said projection (84) extending from said recess (72) to said housing bore (32) between said first and second pistons.

11. The brake booster of claim 1 in which said first piston is movable during operation of the valve assembly to communicate fluid pressure to a work chamber between the first and second pistons, said second piston is movable to develop fluid pressure in the primary pressure chamber and said communicated fluid pressure level is substantially equal to said developed fluid pressure level during braking.

FIG. I

2/2

FIG. 2

European Patent
Office

**EUROPEAN SEARCH REPORT**

0168576
Application number

EP  85 10 5751

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 086 509   (ALFRED TEVES GmbH)<br>* Figures 1-3,5,8 * | 1 | B 60 T   13/12 |
| A | GB-A-2 001 721   (ALFRED TEVES GmbH)<br>* Whole document; figures * | 1 | |
| A | GB-A-2 121 897   (ALFRED TEVES GmbH)<br>*  Page 2, line 29 - page 3, line 8; figure 1 * | 1 | |
| A,D | US-A-4 441 319   (BROWN)<br>* Whole document; figures * | 1 | |
| A | US-A-2 964 909   (GARRISON) | 1 | TECHNICAL FIELDS SEARCHED (Int. Cl.4) |
| A,D | GB-A-2 140 519   (ALFRED TEVES GmbH)<br>* Page 2, lines 31-71; figures * | | B 60 T   13/00 |

The present search report has been drawn up for all claims

| Place of search | Date of completion of the search | Examiner |
|---|---|---|
| THE HAGUE | 16-10-1985 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82